Europäisches Patentamt

European Patent Office

Office européen des brevets

(11) Publication number: 0 565 176 A2

# EUROPEAN PATENT APPLICATION

(21) Application number: 93200931.9

(22) Date of filing: 31.03.93

(51) Int. Cl.5: C05F 3/00, C05F 5/00, C05F 11/00

(30) Priority: 08.04.92 EP 92201019

(43) Date of publication of application:
13.10.93 Bulletin 93/41

(84) Designated Contracting States:
AT BE CH DE DK ES FR GB GR IE IT LI LU MC NL PT SE

(71) Applicant: GIST-BROCADES N.V.
Wateringseweg 1
P.O. Box 1
NL-2600 MA Delft(NL)

(72) Inventor: Sanders, Johan Pieter Marinus
Thorbeckestraat 73
NL-2613 BV Delft(NL)
Inventor: Van Os, Jan Lambert
Laan van Nieuw Oosteinde 113
NL-2274 EC Voorburg(NL)
Inventor: Jones, Brian Edward
Gravin Juliana van Stolberglaan 24
NL-2263 VA Leidschendam(NL)

(74) Representative: Matulewicz, Emil Rudolf
Antonius, Dr. et al
Gist-Brocades NV
Patents and Trademarks Department
Wateringseweg 1
P.O. Box 1
NL-2600 MA Delft (NL)

(54) Process for the treatment of organic waste.

(57) Organic waste material, which contains at least a substantial part of manure is treated by
i - separating the organic material in a fraction (A) mainly consisting of the soluble part of said material such as compounds of potassium and nitrogen in solubilized form and a fraction (B) mainly consisting of the (less soluble or) insoluble part of said material such as compounds of P, Ca, and nitrogen in the organic form;
ii - sterilizing or pasteurizing fraction (B), followed by an anaerobic fermentation using one or more selected species of microoganisms to, at least partly solubilizing fraction (B) to form a fraction (C) which comprises an increased amount of solubilized nitrogen and a decreased amount of insoluble nitrogen compounds; and
iii - wherein fraction (C) is separated into a fraction (D) mainly comprising the soluble compounds such as compounds of nitrogen and into a fraction (E) mainly comprising the insoluble compounds such as compounds of P and Ca.

EP 0 565 176 A2

The present invention relates to a process for the treatment of organic waste.

A considerable part of intensive stock breeding, especially of pigs, poultry and fatling calf and to a lesser extent cattle, is concentrated in confined areas. Concentration of stock has become possible because the amount of livestock held by the stock breeder has become independent of the available land area, due to sufficient supplies of feedstuffs.

As a result of this intensified stock breeding compared to the agricultural land available, problems arise due to the surplus of animal manure. In essence this concerns an increasing amount of minerals such as N, P and K and sometimes Ca and Cl. The surplus of N and P in particular, and to a lesser extent K, is detrimental to ground and surface water, and eventually high nitrate concentrations affect drinking water. In addition N gives rise to the emission of $NH_3$.

Surplus manure is most commonly disposed of by distributing the manure for use as fertilizer or by industrially processing the manure to dry products to be used as fertilizer.

Whether or not manure will be redistributed to other areas depends mainly on the properties of manure in comparison with fertilizer, as the latter is optimized for specific applications. The advantage of using animal manure on agricultural land often relates to the improvement of the structure of the soil by organic materials in the manure. However, there are disadvantages, for example, manure has, compared to fertilizer, a relatively large volume and weight, resulting in high transport, storage and mixing costs. Emission of $NH_3$ has to be suppressed either by using certain application techniques, such as manure injection techniques or ploughing the soil soon after application of the manure or by acidifying the manure. Plant and animal pathogens may also be spread. Furthermore, the quality and composition of the odorous manure cannot be controlled adequately and are variable. As the mutual ratios of N, P and K are fixed for each particular lot and cannot be altered, this makes tuning according to the requirements of soil highly unpredictable, if not impossible.

A substantial part of the N present in animal manure is in the form of organic compounds. This organic N only becomes available to growing crops after being converted by soil bacteria into a mineralized form. This conversion is influenced by conditions such as composition of the soil, water content and temperature. Data on the amount of organic N which is made available by timely conversion to the growing crops, are still inconclusive. However, it is known that a substantial part of the organic N is converted only very slowly and that in the first instance most of the organic N accumulates in the ground. When manure is applied to the land during the autumn, part of the organic N will be lost to the subsequent spring vegetation by leaching of the soil during winter. This effect increases when both a surplus of manure is spread on the fields and at the wrong time.

Industrial processing of manure is still in its infancy. Commonly the manure is processed to form a dry granular product which is almost identical to manure with respect to the dry solids contained. The processing costs are often considerably higher than the value of the dried product. This clearly shows that there is a great need for an economically attractive procedure to process manure.

An comparable problem is posed by other organic waste material than manure, such as vinasse, vegetable waste and horticultural industrial byproducts.

The present invention provides a process comprising the treatment of organic waste which comprises

i - separating the organic waste material into a fraction (A) comprising a soluble part of said material in solubilized form and a fraction (B) comprising an insoluble part of said material and nitrogenous organic compounds;

ii - sterilizing or pasteurizing fraction (B), followed by an anaerobic fermentation using one or more selected species of microoganisms to, at least partly solubilize fraction (B) to form a fraction (C) which comprises an increased amount of solubilized nitrogen and a decreased amount of insoluble nitrogen compounds; and

iii - separating fraction (C) into a fraction (D) comprising the soluble compounds and into a fraction (E) comprising the insoluble compounds.

The process of the invention therefore comprises the treatment of manure whether or not combined with other organic waste material.

The soluble compounds of fraction A are generally compounds of K or N. The insoluble compounds of fraction B are generally compounds of P or Ca or nitrogenous organic compounds. The soluble compounds of fraction D are generally nitrogenous compounds and the insoluble compounds of fraction E are generally compounds of P or Ca.

Step ii results in an increased amount of the insoluble P compounds relative to the not-solubilized N compounds.

The organic waste material preferably comprises at least 40% v/v of manure, more preferably at least 60% v/v. The organic waste material can comprise up to 100% manure. By manure is meant throughout the

2

specification, manure as such, as well as liquid manure. The manure fraction may comprise manure of cattle, calves, pigs and/or poultry and the remaining fraction may comprise vinasse from the production of baker's yeast or alcohol, from citric acid and from amino acid production, vegetable waste, agricultural waste, industrial byproducts of vegetable origin, spent grain from the beer industry, spent grain from the distillery industry, and waste from the wine and olive industries.

According to one embodiment of the invention fraction (C) is separated into a fraction (D) mainly comprising the soluble compounds such as compounds of nitrogen and into a fraction (E) mainly comprising the insoluble compounds such as compounds of P and Ca and wherein fraction (D) is reintroduced in the process by combining it with fraction (A) or any later fraction derived from fraction (A).

Solubilization is obtained by an anaerobic fermentation. During solubilization of the N in fraction B also solubilization of carbohydrates can be induced, the soluble products ending up in fraction (D) and leaving a partly organic stable end product of Ca and P with increased concentration P on dry weight: fraction (E).

Separation of organic waste in fractions (A) and (B) can be performed for example by filtration preferably using a sieve belt press, or by centrifuging preferably using a decanter centrifuge.

According to the state of the art fraction (A) is usually subjected to a methanogenic anaerobic fermentation. This is also true for fraction (B), the difference being that in the latter case longer fermentation times are necessary because of the high solids content.

By this treatment organic carbon and nitrogen containing compounds are degraded to a.o. $NH_3$, $CH_4$ and $CO_2$ (biogas) and biomass. A disadvantage of this way of treating organic waste is that a large parte of the chemical energy locked up in the complex organic molecules is lost. Therefor it is a further object of this invention to preserve as much as possible of this energy by avoiding complete degradation to very simple molecules as above, but instead limiting the degradation to the formation of more complex soluble molecules as organic acids or aminoacids, which are of value as nutrients for industrial aerobic fermentations.

This is done by applying selected species of anaerobic bacteria on waste-derived media which have been sterilised or pasteurised beforehand.

Anaerobic fermentation of fraction B can be carried out in the following way: fraction B is advantageously mixed with water to form a slurry with a dry matter content of between 12% and 16%. The slurry is blended to give smaller particles or fermented without further mechanical treatment.

Optionally the slurry can be acidified to pH 3-5, preferably pH 5 in order to solubilise much of the P fraction which can be separated. Mineral acid such as sulphuric acid, phosphor acid or hydrochloric acid, preferably with nitric acid can be used. Alternatively the slurry can be acidified with an organic acid such as acetic acid. The remaining solids, now low in P, are then reslurried prior to fermentation. Before fermentation the slurry is sterilized or pasteurized. The slurry can be fermented after sterilisation at 120 °C for 20 minutes or after pasteurisation at 80 °C to 100 °C for 10 to 60 minutes.

The pH of the slurry is advantageously adjusted to the desired fermentation pH, using a mineral acid or a mineral base.

The slurry can be fermented anaerobically at a temperature between 10 °C and 80 °C, using a selected species of a bacterium which can degrade cellulose and hemicellulose. Thermophilic bacteria can be used preferably at 60-70 °C. Such a bacterium may be isolated from suitable warm/hot environments such as volcanic hot springs. Or such a bacterium may be chosen for example from the genera:

Clostridium, Thermoanaerobacter and Caldocellum. Examples of such bacteria include:

Clostridium thermocellum NCIMB 10682,

Clostridium stercorarium NCIMB 11754,

Clostridium thermopapyrolyticum UBA 305,

Clostridium thermocopriae IAM 13577,

Clostridium thermobutyricum DSM 4928,

Clostridium thermolactium DSM 2911,

Thermoanaerobacter cellulyticus IFO 14436 and

Caldocellum saccharolyticum ATCC 43494.

Also non-thermophilic bacteria can be used which preferably belong to the genera Acetivibrio, Bacteroides and Cellulomonas. Examples of such bacteria are

Acetivibrio cellulolyticus ATCC 33288,

Clostridium papyrosolvens NCIMB 11394,

Clostridium cellulolyticum ATCC 35319,

Clostridium cellulovorans ATCC 35296,

Clostridium celerecrescens CECT 954,

Bacteroides cellulosolvens ATCC 35603,

3

EP 0 565 176 A2

Cellulomonas species ATCC 21399 and
Cellulomonas fermentans DSM 3133.

These cellulolytic bacteria may be used individually in fermentations or as mixtures of 2 or more species.

Furthermore, the slurry of manure solids formed from fraction B may be fermented anaerobically with acidogenic bacteria or mixtures of acidogenic and cellulolytic bacteria. Acidogenic bacteria produce as fermentation products from sugars organic acids such as acetic-, lactic-, succinic acid and their homologues. Such organic acids may be used as the fermentation substrates in a second fermentation process for example by reintroducing it into the process by combining it with fraction (A). In addition, some acidogenic bacteria are also able to produce other useful products from the fermentation of sugars, for example, ethanol which may be recovered from the fermentation broth. Acidogenic bacteria are not only able to produce these products by the fermentation of sugars, but they are also able to degrade polymeric substances other than cellulose which are also to be found in manure and other wastes of vegetable origin. Such polymeric substances include starch, protein and pectin.

Thermophilic acidogenic bacteria may be isolated from suitable warm/hot environments such as volcanic hot springs. Or such bacteria may be chosen from the genera:
Clostridium, Thermoanaerobacter, Thermoanaerobium, Thermobacteroides, Fervidobacterium, Dictyoglomus and Thermotoga, for example:
Clostridium thermoaceticum DSM 521,
Clostridium thermosulfurogenes DSM 3896,
Clostridium thermosuccinogenes DSM 5807,
Clostridium thermoamylolyticum ATCC 39251,
Clostridium thermoamylolyticum ATCC 39252,
Clostridium thermohydrosulfuricum DSM 567,
Clostridium thermosaccharolyticum DSM 571,
Clostridium thermoautotrophicum DSM 1974,
Clostridium fevidus ATCC 43204,
Thermoanaerobacter ethanolicus ATCC 31550,
Thermoanaerobacter finii DSM 3389,
Thermoanaerobacter brockii ATCC 33075,
Thermobacteroides acetoethylicus DSM 2359
Thermobacteroides leptospartum IAM 13499.
Fervidobacterium nodosum ATCC 35602,
Dictyoglomus thermophilum DSM 3960 and
Thermotoga maritima DSM 3109.

Also non-thermophilic microorganisms can be used in the process of the invention and can be for example selected from the genera Acetogenium, Acetobacterium, Eubacterium and Lactobacillus. Examples of suitable bacteria are:
Clostridium aceticum DSM 1496,
Acetogenium kivui DSM 2030,
Acetobacterium woodii ATCC 29683,
Eubacterium limonsum DSM 20543 and
Lactobacillus amylophilus NRRL B-4437.

Fractions (A) and (D), whether or not combined can be concentrated and desalted to form fraction (F). Concentration and desalting can be effected by an ultra-filtration and reversed osmosis treatment, or by evaporation when desalting is not necessary.

According to another advantageous aspect, amino acids or other useful nitrogen containing compounds (such as feed addtivies) can be obtained by aerobically fermenting fractions such as fraction (F).

The effluent of the fermentation of fraction (F) can be separated (e.g. by centrifugation) to form a fraction (G) comprising products such as essential amino acids, and a fraction (H) being the residue such as the biomass formed during fermentation. This fraction (H) can be oxidized biologically or by chemical means and/or dehydrated to form fraction (M) and/or recycled to fraction (B). Fraction (E) containing the insoluble compounds of P and Ca can be oxidized and/or dehydrated to form fraction (K). Also the soluble compounds present in fractions (A), (D) and (F) can be oxidized and/or dehydrated to form fraction (L). Fraction (L) may comprise oxidized compounds from at least one of fractions (A), (D) and (F).

Oxidation processes or dehydration processes are known as such e.g. as described in European Patent Application EP-A-0265027 (oxidation), US 3,855,079, US 4,270,974 and US 4,608,120 (Carven-Greenfield dehydration process).

4

Fraction (K) can be advantageously applied to the land in the latter part of the year because this fraction does not contain substantial amounts of N.

The fractions obtained from the organic waste material may be combined in different proportions to provide fertilizer or intermediates for a fertilizer. The proportions of N, P and K in the resulting fertilizing or intermdiate may be varied by altering the proportions in which the fractions are mixed and by altering the combination of fractions which are mixed together. For example, fraction (K) with a high P:N ratio and fraction (L) with a low P:N ratio and/or fraction (M) can be combined to prepare a fertilizer with a desired P:N ratio. Fraction (K) contains a high proportion of P compared to N and is suitable for applying to fields in autumn.

The fertilizer produced according to the present invention can be used as the direct product of the process of the present invention. The fertilizer can also be reformulated by, for example, pelletizing or drying.

All publications and patent applications cited in this specification are herein incorporated by reference as if each individual publication or patent application were specifically and individually indicated to be incorporated by reference.

Although the foregoing invention has been described in some detail by way of illustration and example for purposes of clarity and understanding, it will be readily apparent to those of ordinary skill in the art in light of the teachings of this invention that certain changes and modifications may be made thereto without departing from the spirit and scope of the appended claims.

The following experimental data are given to illustrate the invention. It has to be understood that a person skilled in the art who is familiar with the methods may use other strains which can be equally used for the purpose of the present invention. These alterations are included in the scope of the invention.

Example 1

20 kg of liquid pig manure was centrifuged at 2000 rpm (Beckman, model J-6M/E) for 15 minutes. The supernatant was decanted from the pellet to give an insoluble (solids) fraction and a liquid fraction. Both fractions were weighed. The insoluble fraction was dried in an oven at 105°C for 24 hours and reweighed to determine the dry matter content.

Results

Weight of liquid manure = 20 kg
Weight of soluble fraction = 12.5 kg
Weight of insoluble fraction = 7.5 kg
Weight of dried insoluble fraction = 1.8 kg
Dry matter content insoluble fraction = 24% w/w

Example 2

Isolation of anaerobic, thermophilic, cellulose-degrading bacteria

Samples of water, sediment and soil were collected from in and around hot springs, thermal wells, steam vents, fumaroles and volcanic mud pools in the environs of Naples and Lardarello, Italy (see Table 1).

The samples were collected in glass bottles using precautions to exclude oxygen. To preserve the anoxic nature of the sample, 2 ml of 'anaerobic reagent' was added to the sample immediately prior to sealing the bottles. The 'anaerobic reagent' had the following composition (g per 100 ml):

L-cysteine hydrochloride, 0.3; $Na_2S.9H_2O$, 0.3; sodium dithionite, 0.05; resazurin, 0.0025; adjusted to pH 7.0 with sulphuric acid.

For the enrichment and selection of cellulolytic bacteria strict anaerobic techniques were applied, see R.E. Hungate in Methods in Microbiology, volume 3B (J.R. Norris and D.W. Ribbens. eds.), Academic Press, London and New York, 1969, pp. 117-132; T.L. Miller and M.J. Wolin, Applied Microbiology, 27, 985-987 (1974); W.E. Balch and R.S. Wolfe, Applied & Environmental Microbiology, 32, 781-791 (1976); W.E. Balch et al, Microbiological Reviews, 43, 260-296 (1979).

Manipulations were carried out in a Freter-type anaerobic chamber (A. Aranki and R. Freter, Am. J. Clin. Nutr., 25, 1329-1334 (1972)) (Coy Laboratory Products, Inc., Ann Arbor, Michigan, USA) containing $N_2$ - (88%), $H_2$ (7%), $CO_2$ (5%). Approximately 5 cc of sample (mud, soil, water, etc.) was transferred to 25 ml

5

supplemented minerals medium (SMM) containing 0.3% w/v amorphous cellulose, pH 7.0 in 125 ml serum bottles under a head-space gas of $N_2$ (95%), $CO_2$ (5%) closed with a neoprene stopper and crimp seal. The cultures were incubated at 70°C and examined daily. When active cellulose degradation was observed the cultures were transferred (2%) to fresh cellulose-SMM medium and incubated at 70°C.

Bacterial clones were obtained using the dilution pour plate method on 'reverse-double-layer-SCDT-agar'. The Petri dishes were incubated anaerobically (Gas Pak 100 disposable anaerobic system, Beckton Dickinson & Co.) at 70°C. After 5-10 days small colonies were clearly visible associated with clear zones of cellulose hydrolysis in the agar. Isolated colonies of bacteria were drawn up into the capillary of a Pasteur pipette and extruded into liquid medium (SMM-cellulose) to obtain axenic cultures.

The supplemented minerals medium (SMM) had the following composition (g/l):
$K_2HPO_4$, 1.31; $KH_2PO_4$, 0.34; $(NH_4)_2SO_4$, 0.5; $MgCl_2.6H_2O$, 0.77; KCl, 0.3; $FeSO_4.7H_2O$, 0.00125; $CaCl_2.2H_2O$, 0.15; yeast extract, 1.0; resazurin, 0.000002; L-cysteine HCl, 0.5; $Na_2S.9H_2O$, 0.5; $NaHCO_3$, 4.2; vitamin cocktail, 0.5 ml; and trace elements solution, 9.0 ml.

The vitamin cocktail had the following composition (mg/l):
thiamine HCl, 10; pantothenic acid (Ca salt), 100; nicotinamide, 100; riboflavin, 10; pyridoxin HCl, 200; p-aminobenzoic acid, 100; biotin, 40; folic acid, 40; cyanocobalamin, 2; thioctic acid, 100.

The trace elements solution had the following composition (g/l):
$FeSO_4.7H_2O$, 0.1; $MnCl_2.4H_2O$, 0.1; $CoCl_2.6H_2O$, 0.17; $CaCl_2.2H_2O$, 0.1; $ZnCl_2$, 0.1; $CuCl_2$, 0.02; $H_3BO_4$, 0.01; $NaMoO_4.2H_2O$, 0.01; NaCl, 1.0; $Na_2SeO_3$, 0.02; $NiCl_2.6H_2O$, 0.1; nitrilotriacetic acid (neutralized to pH 6.5 with KOH), 12.8.

SCDT-agar had the same composition (g/l), as SMM with the addition of agar, 15; dithiothreitol, 0.8.

L-cysteine HCl and $Na_2S.9H_2O$ concentrations were reduced to 0.1 g/l each and amorphous cellulose was added at 5 g/l.

Cultures in 'reverse-double-layer-pour-plates' were prepared by adding a bacterial suspension (1.0 ml) from serial dilutions in basic SMM medium to molten SCDT-agar (10 ml) without cellulose, held at 60°C, mixing and pouring into Petri dishes. After gelling had taken place an upper layer of SCDT-agar (10 ml) plus cellulose (without bacteria) was poured onto the lower layer.

In Table 1 the cultures obtained are shown.

A sample of strain SF 13/4 has been deposited with the CBS on April 7, 1992 under the accession number CBS 202.92.

A sample of strain Cs 5/1 has been deposited with the CBS on April 7, 1992 under the accession number CBS 203.92.

CBS = Centraal Bureau voor Schimmelcultures, Oosterstraat 1, 3742 SK Baarn, The Netherlands.

Table 1

Origin of Anaerobic, Thermophilic, Cellulose-degrading Bacterial Strains

| STRAIN | LOCATION | SAMPLE | TEMP °C | pH |
|---|---|---|---|---|
| AT 7/1 | Agnano Terme, Napoli | water & sediment from hot spring drainage channel | 16 | 7.0 |
| SN 1/1 | Stufe di Nerone, Napoli | water from thermal well | 72 | 7.2 |
| Cs 5/1 | Cava Scura, Isola d'Ischia, Napoli | water & sediment from hot spring | 59 | 7.8 |
| F 2/1 | Fumarole, Isola d'Ischia, Napoli | sand at 15 cm depth from steaming beach | 58 | 7.0 |
| SF 13/4 | San Federigo, Lago Boracifero, Grosseto | water & sediment in run off channel from boiling spring | 61 | 7.0 |

Example 3

3 kg of manure solids (insoluble fraction of Example 1) were suspended in 1.5 litre water and blended in a mixer for 30 seconds. A 25 ml sample was removed for dry matter analysis. The pH of the slurry was

7

adjusted to pH 7 using 65% nitric acid. Portions (25 ml) of the slurry were distributed in 100 ml bottles. The slurry in the bottles was flushed using $O_2$-free nitrogen for 20 minutes and the bottles were sealed under nitrogen using a neoprene rubber stopper and crimp seal. Immediately prior to sealing the bottles 0.5 ml of a 0.5% solution of cysteine hydrochloride was added to the manure slurry. The bottles and their contents were sterilised in an autoclave at 121°C for 20 minutes.

When cooled the bottles of manure slurry were inoculated (10%) with actively growing cultures of anaerobic, thermophilic, cellulose-degrading bacteria. The manure cultures were incubated at 65°C for 5 days.

The bottles were opened for a dry matter analysis of the fermented manure slurry. The slurry was centrifuged at 4000 rpm (Hettich Rotanta/RP) for 15 minutes and the supernatant decanted. The remaining pellet of insoluble material was dried at 105°C for 24 hours and weighed.

The results of this experiment are set out in Table 2. The data clearly show that part of the insoluble fraction of manure is digested by cellulose-degrading bacteria.

Table 2

| The dry matter content of the insoluble fraction of liquid pig manure before and after fermentation by cellulose-degrading bacteria | | |
|---|---|---|
| BACTERIAL STRAIN | DRY MATTER % w/v | |
| | before fermentation | after fermentation |
| | 12.3 | |
| AT 7/1 | | 8.6 |
| SN 1/1 | | 10.7 |
| Cs 5/1 (CBS 203.92) | | 10.6 |
| F 2/1 | | 10.2 |
| SF 13/4 (CBS 202.92) | | 9.9 |

Example 4

Nine bottles of manure slurry sealed under $O_2$-free nitrogen as described in Example 3 were inoculated (10%) with actively growing cultures of anaerobic, thermophilic, cellulose-degrading bacteria or anaerobic, thermophilic, acidogenic bacteria, or mixtures of both, as set out in Table 3. A single bottle was not inoculated with bacteria and served as a control. The manure slurry cultures were incubated at 65°C for 5 days.

The bottles were opened and the cultures were centrifuged at 4000 rpm (Hettich Rotanta/RP) for 15 minutes. The liquid was separated from the insoluble fraction by decanting the supernatant. The total nitrogen content of the insoluble fraction (pellet) was determined using the Kjeldahl method. The organic acids in the liquid fraction were analysed by H.P.L.C.

The results of this experiment are displayed in Table 3. These clearly demonstrate that the (insoluble) nitrogen content of the manure-insoluble fraction is reduced by fermentation with cellulolytic and acidogenic bacteria.

Table 3

Nitrogen content of the insoluble fraction of liquid pig manure and the production of organic acids before and after fermentation

| FERMENTATION TREATMENT — Bacterium | | PELLET | SUPERNATANT Organic acids (g/l) | | |
|---|---|---|---|---|---|
| Cellulolytic | Acidogenic | Total nitrogen % w/w | acetate | lactate | formate |
| NOT FERMENTED | | 0.95 | 0 | 0 | 0 |
| Cs 5/1 (CBS 203.92) | — | 0.74 | 1.04 | 0.15 | 0.08 |
| SF 13/4 (CBS 202.92) | — | 0.79 | 1.00 | 0.09 | 0.56 |
| Cs 5/1 (CBS 203.92) | Thermoanaerobium brockii (ATCC 33075) | 0.76 | 0.75 | 0.08 | 0 |
| Cs 5/1 (CBS 203.92) | Clostridium thermoamylolyticum (ATCC 39252) | 0.76 | 1.16 | 0.15 | 0.06 |
| SF 13/4 (CBS 202.92) | Thermoanaerobium brockii (ATCC 33075) | 0.74 | 0.88 | 0.15 | 0.36 |
| SF 13/4 (CBS 202.92) | Clostridium thermoamylolyticum (ATCC 39252) | 0.72 | 0.68 | 0.16 | 0.44 |
| | Thermoanaerobium brockii (ATCC 33075) | 0.73 | 0.63 | 0.14 | 0.62 |
| | Clostridium thermoamylolyticum (ATCC 39252) | 0.74 | 0.95 | 0.18 | 0.63 |

At the same time organic acids (acetic, lactic, formic) are produced by the fermentation.

Example 5

Nine bottles of manure slurry sealed under $O_2$-free nitrogen as described in Example 3 were pasteurised at 80°C for 1 hour. The bottles were inoculated with bacteria as described in Example 4.

After incubation at 65°C for 5 days the soluble components of the cultures were separated from the insoluble components by centrifugation at 4000 rpm (Hettich Rotanta/RP) for 15 minutes and decanting the supernatant. The ammonium content (soluble nitrogen) of the liquid fraction was determined using the glutamate dehydrogenase method (Granutest 15 Plus, Merck Diagnostica, Darmstadt, Germany).

The results are set out in Table 4. These clearly show that the concentration of the soluble nitrogen compound ammonium increases during the fermentation of the manure insoluble fraction.

Example 6

Eight bottles of manure slurry prepared under $O_2$-free nitrogen as described in Example 3, containing 10-12% dry matter, were inoculated (10%) with a culture of Clostridium thermacopriae IAM 13577, which was grown overnight at 60°C in Brain Heart Infusion Broth (BHI) (Difco Laboratories). The manure slurry cultures were incubated at 60°C. Sampling was carried out after 0, 6, 13 and 26 days of incubation. For every sample an unopened bottle was used. Non-inoculated bottles were incubated as well and served as a control.

The number of viable cells was determined by total plate counts of colony forming units (cfu) on BHI-agar plates. The pH of the sample was measured. Next, the

Table 4

Ammonium concentration in the liquid fraction before and after fermentation of manure solids

| FERMENTATION TREATMENT | | NH$_4^+$ (mg/l) in SUPERNATANT |
|---|---|---|
| Bacterium | | |
| Acidogenic | Cellulolytic | |
| NOT FERMENTED | | 1970 |
| – | Cs 5/1 (CBS 203.92) | 2875 |
| – | SF 13/4 (CBS 202.92) | 2848 |
| Thermoanaerobium brockii (ATCC 33075) | – | 2937 |
| Clostridium thermoamylolyticum (ATCC 39252) | – | 2930 |
| Thermoanaerobium brockii (ATCC 33075) | Cs 5/1 (CBS 203.92) | 2568 |
| Clostridium thermoamylolyticum (ATCC 39252) | Cs 5/1 (CBS 203.92) | 2745 |
| Thermoanaerobium brockii (ATCC 33075) | SF 13/4 (CBS 202.92) | 2619 |
| Clostridium thermoamylolyticum (ATCC 39252) | SF 13/4 (CBS 202.92) | 2671 |

cultures were centrifuged at 15,000 rpm (Sorvall RC-5B) for 15 minutes. The supernatant was used for further analysis.

Cellulase activity was measured using Carboxymethylcellulose (CMC)(Sigma C4888) as a substrate. One unit of activity is defined as the liberation of 1 mmol of reducing sugar equivalent per minute of incubation time. The organic acids and the amino aids were analyzed by H.P.L.C.

The results of the experiment are displayed in Tables 5 to 9. These clearly demonstrate that Clostridium thermocopriae grows in manure slurry (10-12% dry matter) and consumable compounds such as organic acids (lactic acid, acetic acid) and amino acids (alanine, valine, asparagine, lysine) are produced by the fermentation.

Table 5

| Total plate count of Clostridium thermocopriae in manure solids. | | |
|---|---|---|
| Incubation time (days) | viable cells (log cfu / ml) | |
| | Inoculated | Control |
| 0 | 4.48 | 1 |
| 13 | 6.16 | 1 |
| 26 | 4.40 | 1 |

Table 6

| pH profile of manure solids after incubation with Clostridium thermocopriae. | | |
|---|---|---|
| Incubation time (days) | pH | |
| | Inoculated | Control |
| 0 | 7.8 | 7.8 |
| 6 | 7.8 | 7.8 |
| 13 | 6.5 | 7.5 |
| 26 | 6.3 | 7.5 |

Table 7

| Cellulase activity in manure solids after incubation with Clostridium thermocopriae. | | |
|---|---|---|
| Incubation time (days) | Cellulase activity (CMCase Units / l) | |
| | Inoculated | Control |
| 0 | 0 | 0 |
| 6 | 35 | 0 |
| 13 | 89 | 0 |
| 26 | 103 | 0 |

EP 0 565 176 A2

Table 8

| Concentration of amino acids in manure solids after incubation with Clostridium thermocopriae. | | | | | |
|---|---|---|---|---|---|
| Amino acid | Amino acid concentration (mM) | | | | |
| | 0 days | 13 days | | 26 days | |
| | Control | Inoculated | Control | Inoculated | Control |
| ASP | 0.0 | 0.6 | 0.1 | 0.7 | 0.2 |
| GLU | 0.0 | 0.3 | 0.0 | 0.4 | 0.0 |
| SER | 0.0 | 0.0 | 0.0 | 0.2 | 0.0 |
| ARG | 0.0 | 0.3 | 0.0 | 0.6 | 0.0 |
| ALA | 0.1 | 10.7 | 0.1 | 20.2 | 0.1 |
| TYR | 0.0 | 0.1 | 0.0 | 0.1 | 0.1 |
| VAL | 0.1 | 0.9 | 0.1 | 1.5 | 0.0 |
| ILE | 0.0 | 0.2 | 0.0 | 0.2 | 0.0 |
| LEU | 0.0 | 0.3 | 0.0 | 0.3 | 0.0 |
| PHE | 0.0 | 0.3 | 0.0 | 0.3 | 0.0 |
| LYS | 0.1 | 0.5 | 0.1 | 0.6 | 0.1 |
| Total | 0.3 | 14.1 | 0.4 | 25.2 | 0.5 |

Table 9

| Concentration of organic acids in manure solids after incubation with Clostridium thermocopriae . | | | | | |
|---|---|---|---|---|---|
| Acid | Organic acid concentration (g /l) | | | | |
| | 0 days | 13 days | | 26 days | |
| | Control | Inoc. | Control | Inoc. | Control |
| Lactic acid | < 0.01 | 2.22 | < 0.01 | 3.15 | < 0.01 |
| Formic acid | < 0.01 | < 0.01 | 0.04 | 0.10 | < 0.01 |
| Acetic acid | 1.79 | 4.74 | 3.13 | 4.30 | 3.64 |
| Propionic acid | 0.51 | 0.37 | 0.61 | 0.31 | 0.72 |
| Isobutyric acid | < 0.01 | < 0.01 | 0.06 | 0.04 | 0.06 |
| Succinic acid | < 0.01 | < 0.01 | < 0.01 | < 0.01 | < 0.01 |
| Isovaleric acid | 0.08 | 0.14 | 0.29 | 0.09 | 0.16 |

## Claims

1. Process for the treatment of organic waste material, comprising manure and optionally other organic material, which comprises
   i - separating the organic waste material into a fraction (A) comprising a soluble part of said material in solubilized form and a fraction (B) comprising an insoluble part of said material and nitrogenous organic compounds;
   ii - sterilizing or pasteurizing fraction (B), followed by an anaerobic fermentation using one or more selected species of microoganisms to, at least partly, solubilize fraction (B) to form a fraction (C)

13

which comprises an increased amount of solubilized nitrogen and a decreased amount of insoluble nitrogen compounds; and

iii - separating fraction (C) into a fraction (D) comprising the soluble compounds and into a fraction (E) comprising the insoluble compounds.

2. Process according to claim 1 wherein fraction (D) is combined with fraction (A).

3. Process according to any one of claims 1 or 2 which further comprises concentrating and/or desalting fraction (A) and/or (D) to form fraction (F).

4. Process according to claim 3 wherein the concentration step comprises an ultra-filtration, a reversed osmosis treatment, an evaporation or a combination thereof.

5. Process according to claim 3 or 4 wherein fraction (F) is fermented to form amino acids or feed additives.

6. Process according to claim 5 wherein the effluent of the fermentation of fraction (F) is separated into a soluble fraction (G) comprising amino acids or feed additives and a fraction (H) comprising the remainder of the effluent.

7. Process according to any one of the preceding claims wherein at least a part of fraction (E) is oxidized and/or dehydrated to form fraction (K).

8. Process according to any one of the preceding claims wherein at least a part of fraction (A), (D) and/or (F) is oxidized and/or dehydrated to form fraction (L).

9. Process according to claim 6 wherein at least part of fraction (H) is oxidized and/or dehydrated to form fraction (M).

10. Process according to any one of claims 7-9 wherein the oxidation comprises a chemical process and/or a biological process.

11. A process according to claim 10 wherein the chemical oxidation process is wet oxidation and the biological oxidation is nitrification.

12. Process according to any one of claims 7-9 wherein the dehydration comprises an evaporation process.

13. A process according to claim 12 wherein the evaporation process is a Carven-Greenfield process.

14. Process according to any one of claims 7 to 12 wherein at least a part of fraction (K), (L), and/or (M) is used to produce a fertilizer and/or an intermediate for a fertilizer.

15. Process according to any one of the preceding claims wherein the manure fraction of the organic waste poultry and the other organic material comprises at least one of vinasse from baker's yeast, alcohol production, citric acid and amino acid production, vegetable waste, agricultural waste, industrial byproducts of vegetable origin, spent grain from the beer industry, spent grain from the distillery industry and waste from the wine or olive industry.

16. A process for the treatment of organic waste material, substantially as described in any one of the Examples.

17. Fertilizer or intermediate for a fertilizer comprising any useful ratio of N, P and K compounds produced by combining different fractions formed by fractionating organic waste material which comprises manure and optionally other organic material.

18. Fertilizer of intermediate for a fertilizer according to claim 17 wherein the fractions are produced according to the process of claim 14.

14

**19.** Use of the fertilizer according to claim 17 or 18 on land.